**Europäisches Patentamt**

**European Patent Office**

**Office européen des brevets**

(19)

(11) Veröffentlichungsnummer : **0 363 394 B1**

(12) EUROPÄISCHE PATENTSCHRIFT

(45) Veröffentlichungstag der Patentschrift :
**24.07.91 Patentblatt 91/30**

(51) Int. Cl.⁵ : **B29C 45/66, B29C 45/68, B29C 45/17**

(21) Anmeldenummer : **88904473.1**

(22) Anmeldetag : **19.05.88**

(86) Internationale Anmeldenummer :
**PCT/DE88/00304**

(87) Internationale Veröffentlichungsnummer :
**WO 88/09256 01.12.88 Gazette 88/26**

(54) **PRÄZISIONSSCHLIESSEINHEIT FÜR EINE SPRITZGIESSMASCHINE.**

(30) Priorität : **27.05.87 DE 3718106**

(43) Veröffentlichungstag der Anmeldung :
**18.04.90 Patentblatt 90/16**

(45) Bekanntmachung des Hinweises auf die
Patenterteilung :
**24.07.91 Patentblatt 91/30**

(84) Benannte Vertragsstaaten :
**AT CH FR GB IT LI**

(56) Entgegenhaltungen :
**EP-A- 0 213 211**
**EP-A-01 905 38**
**CH-A- 654 506**
**DE-C- 569 313**
**FR-A- 1 188 522**
**FR-A- 1 404 585**
**FR-A- 2 256 828**
**FR-A- 2 516 857**
**US-A- 2 372 833**
**US-A- 3 208 105**

(73) Patentinhaber : **MANNESMANN**
**Aktiengesellschaft**
**Mannesmannufer 2**
**W-4000 Düsseldorf 1 (DE)**

(72) Erfinder : **BLÜML, Hans**
**Kappelstrasse 32**
**W-8601 Burgthann (DE)**
Erfinder : **KLEIN, Peter**
**Max-Reger-Str. 64**
**W-8501 Schwaig (DE)**
Erfinder : **WÜRL, Ernst**
**Am Galgenfeld 29**
**W-8831 Höttingen (DE)**

(74) Vertreter : **Meissner, Walter, Dipl.-Ing. et al**
**Herbertstrasse 22**
**W-1000 Berlin 33 (DE)**

## Beschreibung

Die Erfindung betrifft eine Präzisionsschließeinheit für Spritzgießmaschinen mit einem Maschinenbett und darauf angeordneter fester und verschiebbar geführter Werkzeugaufspannplatte sowie mindestens einem Antrieb zum Bewegen und/oder Verriegeln der Werkzeugaufspannplatte.

Das steigende Marktvolumen für Präzisionsspritzgießteile, wie z.B. Computer-Peripherie, Kopiergeräte, Fotoindustrie, Telekomunikationsgeräte, optische Speichermedien etc. erfordert entsprechende Präzisionsspritzgießmaschinen. Die diesen Anforderungen entsprechenden Maschinen müssen besondere Eingenschaften aufweisen, wie insbesondere Formsteifigkeit, exakte Werkzeugplattenführungen und -parallelität auch im Grenzschließkraftbereich sowie Prägemöglichkeit.

Es sind Spritzgießmaschinen bekannt, die an Holmen geführte Werkzeugaufspannplatten aufweisen, wobei die bewegliche Werkzeugaufspannplatte von einem oder mehreren Antrieben, bestehend aus Servomotor und Kugelgewindespindeln bewegt wird. Dieser Aufbau hat in Bezug auf eine exakte Bewegung der Werkzeugaufspannplatte durch die Kugelgewinde und Servomotoren die bisher üblichen Fahrbewegungsantriebe der Werkzeugaufspannplatte mittels Kniehebel oder Hydrozylinder ersetzt. Nachteilig ist bei den bekannten Maschinen jedoch nach wie vor die nicht präzise Parallelführung der Werkzeugaufspannplatte an den Holmen, weil die Holmenbüchsenführungen den hohen Anforderungen nicht genügen.

Eine Schließeinheit mit einem Maschinenbett und je einer Präzisionsschließeinheit für eine Spritzgießmaschine mit einem Maschinenbett und je einer darauf angeordneten festen und verschiebbar geführten Werkzeugaufspannplatte sowie mindestens einem hydraulischen Antrieb zum Bewegen und/oder Verriegeln der Werkzeugaufspannplatte ist aus der US-A-3208105 bekannt.

Aus der US-PS 3208135 ist eine Spritzgießmaschine bekannt, bei der auf der Werkzeugaufspannplatte reitend Hydraulikmotore Ketten antreiben, die ihrerseits über Muttern Schraubenspindeln antreiben. Bei dieser Antriebsart treten Spiele und Ungenauigkeiten auf, die einen Gleichlauf unmöglich machen.

Eine weitere Spritzgießmaschine, und zwar für Kunststoffe, ist aus der FR-OS 25 16 857 zu entnehmen, wobei dort auf die Platte Seitenkräfte wirken können, die — wenn sie höher sind als das Gewicht der Platte — zu vertikalen Verschiebungen führen.

Ein weiterer Nachteil der eingangs erwähnten, aus der Praxis bekannten, Maschinen liegt darin, daß die verwendeten Eltroantriebe mit ihrer kleinen Leistungsdichte eine kompakte Ausführung der Maschine nicht ermöglichen. So hat man versucht, in höheren Leistungsklassen durch Parallelschaltung von zwei Elektromotoren die benötigte Leistung zu erzielen, doch ist das Ergebnis auch nicht befriedigend.

Ziel der vorliegenden Erfindung ist es, ausgehend von den vorbeschriebenen Problemen und Nachteilen eine Präzisionsschließeinheit für eine Spritzgießmaschine zu schaffen, die unter Verwendung teilweise bekannter Merkmale und Maßnahmen ermöglicht, die maschinenbaulichen Voraussetzungen für Präzisionsspritzguß zu schaffen.

Zur Lösung der Aufgabe sind eine Reihe von Merkmalen erforderlich, die im kennzeichnenden Teil des ersten Patentanspruches aufgeführt sind.

Durch die Kombination von der an sich bekannten Kugelspindel mit einer Präzisions-Linearführung am Maschinenbett wird bei günstiger Krafteinleitung die Parallelität der beiden Werkzeughälften sowohl beim Schließen als auch während des Einspritzvorganges gesichert. Durch die Anordnung der beiden Kugelspindeln horizontal in der Kraftebene kann in Verbindung mit dem synchronisierten Antrieb mit präziser Spindelsteigung der Kugelspindel eine parallele Kraftebene zur festen Werkzeugaufspannplatte gebildet werden, wobei der leistungsstarke Hydraulikmotor einen kompakten Maschinenaufbau ermöglicht.

Vorzugsweise ist nach einem weiteren Merkmal der Erfindung vorgesehen, daß die Präzisions-Linearführung als Linear-Wälzführung ausgeführt ist, wobei im Fußbereich der Werkzeugaufspannplatte in entsprechender Abstützbreite Vier-Linear-Wälzelemente vorgesehen sind.

Zusätzlich kann zur Verbesserung der Formsteifigkeit vorgesehen sein, daß die Präzisionslinearführung auf einem aus einem Polymerbeton geformten Maschinenbett befestigt ist. Diese Maschinenbetten zeichnen sich durch hohe Dämpfung und hohe Formsteifigkeit bei großer Gestaltungsfreiheit aus.

Der als Antrieb verwendete Hydromotor ist nach einem weiteren Merkmal der Erfindung auf mindestens zwei Schluckvolumen umschaltbar. Dadurch werden die eingangs geschilderten Nachteile des Elektroantriebes vermieden und eine Anpassung des Antriebes an die kinematischen Forderungen der bewegbaren Werkzeugaufspannplatte realisiert. Durch Volumenumschaltung des Motors stehen für eine schnelle Werkzeugbewegung eine hohe Antriebsdrehzahl und für den Aufbau einer Werkzeugschließkraft ein hohes Drehmoment zur Verfügung.

Es ist jedoch nach einem anderen Merkmal der Erfindung auch denkbar, dem Hydromotor ein mechaniches Umschaltgetriebe zuzuordnen, mit dem mindestens zwei Drehmoment-Drehzahlverhältnisse schaltbar sind, um die unterschiedlichen Bewegungs- bzw. Leistungsanforderungen zum Schließen und Verfahren der Werkzeugaufspannplatte zu realisieren. Das Umschaltgetriebe kann in einer Ausgestaltung dieses Vorschlages als in den Antriebsstrang der Kugelspindeln integriertes Planetengetriebe ausgebildet sein. Beispielsweise kann der Antrieb über einen Zahnriehmen erfolgen und das Planetengetriebe in die Zahnriehmenscheibe eingebaut sein.

Zur Ansteuerung des Hydromotors ist nach einem weiteren Merkmal der Erfindung vorgesehen, ein Servoventil im geschlossenen Regelkreis und Vier-Quadranten-Betrieb vorgesehen. Auch ist es denkbar, daß zur Ansteuerung des Hydromotors ein schrittmotorgesteuertes Servoventil (hydraulischer Rotationsverstärker) vorgesehen ist. Die letztere Variante hat den Vorteil, daß die digitalen Signale bei NC-Steuerung direkt dem hydraulischen Rotationsverstärker zugeführt werden können.

In einer günstigen Ausgestaltung der Erfindung ist vorgesehen, daß der Hydromotor als reiner Fahrantrieb für die bewegbare Werkzeugaufspannplatte konzipiert und dieser als Konstantmotor mit Bremse ausgebildet ist und daß zum Verriegeln der beweglichen gegenüber der festen Werkzeugaufspannplatte hydraulische und/oder hydraulisch betätigte Verriegelungselemente vorgesehen sind. Es kann nach einer Ausgestaltung letzteren Vorschlages vorgesehen sein, daß an der festen Werkzeugaufspannplatte je ein jedem Kugelspindelende zugeordnetes, auf diesem montiertes hydromechanisches Spannelement zugeordnet ist, über das mittels Keilwirkung eine axial gerichtete Schließkraft auf die gegen Drehung gesicherte Kugelspindel hydraulisch aufbringbar ist. Bei diesen Lösungen dient die Kugelspindel dem reinen Fahrantrieb der beweglichen Werkzeugaufspannplatte, während durch das Spannelement eine Zugkraft auf die Spindel zwischen der beweglichen und festen Werkzeugaufspannplatte aufgebracht wird, so daß diese mit der erforderlichen Schlipßkraft zusammengehalten werden.

Nach einem weiteren Merkmal der Erfindung ist vorgesehen, daß an der festen Werkzeugaufspannplatte je eine mit dem Ende der Kugelspindeln integrierte Kolben-Zylinder-Einheit vorgesehen ist, mit der bei blockierter Spindeldrehung die Schließkraft der beiden Werkzeugaufspannplatten erzeugbar ist. Entegen dem vorstehenden Vorschlag wird bei der letzteren Lösung die Schließkraft hydraulisch über ein Druckkissen auf die als Zugspindel wirkende Kugelspindel aufgebracht.

Es ist jedoch nach einem anderen Merkmal der Erfindung ebenso möglich, daß die Kugelspindeln zur Aufbringung der Werkzeugschließkraft mit je einer in der bewegbaren Werkzeugaufspannplatte angeordneten Kugelumlaufmutter korrespondieren, die von einem gemeinsamen Hydromotor synchron antreibbar sind und für die Werkzeugschließbewegung eine den gesamten Fahrhub bestreichende Kolben-Zylinder-Einheit vorgesehen ist, die mechanisch formschlüssig verriegelbar ist. Bei diesem Vorschlag wird also in Umkehrung der vorhergehenden Lösung die Fahrbewegung mit einem Hydraulikzylinder durchgeführt, der am Hubende automatisch blockiert wird. Das Verriegeln der Werkzeughälften erfolgt über die Kugelspindeln, die mit Hilfe des Hydromotors durch die synchron angetriebenen Kugelumlaufmuttern die Werkzeughälften aneinanderpressen.

Mit der vorliegenden Erfindung wird insgesamt eine Spritzgießmaschine so verbessert, daß eine Präzisionsschließeinheit geschaffen ist, mit der es möglich wird, Spritzgießteile hoher Genauigkeit dadurch zu erzeugen, daß die Konstruktion und Steifigkeit der Maschine den hohen Anforderungen genügt. Dazu gehört, daß in Kombination mit dem verwindungssteifen Maschinenbett exakte und präzise Krafteinleitungen in die für den Spritzgießvorgang wesentlichen Teile der Maschine ermöglicht werden, wobei die bewegbaren Teile genauestens geführt werden.

Ein Ausführungsbeispiel der Erfindung ist in der Zeichnung dargestellt und wird nachfolgend beschrieben. Es zeigt :

Fig. 1     die Schließeinheit einer Spritzgießmaschine in grob vereinfachter Darstellung mit einem Zwei-Stufen-Hydro-Antrieb,

Fig. 2     einen Querschnitt durch die Maschine nach Figur 1 entlang der Schnittlinie I-I,

Fig. 3     deutet zwei Antriebsvarianten des Hydroantriebes schematisch an,

Fig. 4     ist eine Variante der Schließeinheit mit hydro-mechanischem Spannelement der Kugelspindel dargestellt,

Fig. 5     zeigt eine Variante der Schließeinheit nach Figur 4 mit hydraulischem Schließkraftaufbau,

Fig. 6     zeigt ein anderes Schema der Schließeinheit mit hydraulischem Fahrbewegungsantrieb und Schließkrafterzeugung über Kugelspindel und

Fig. 7     einen Schnitt durch die Maschine nach Figur 6 entlang der Schnittlinien II-II

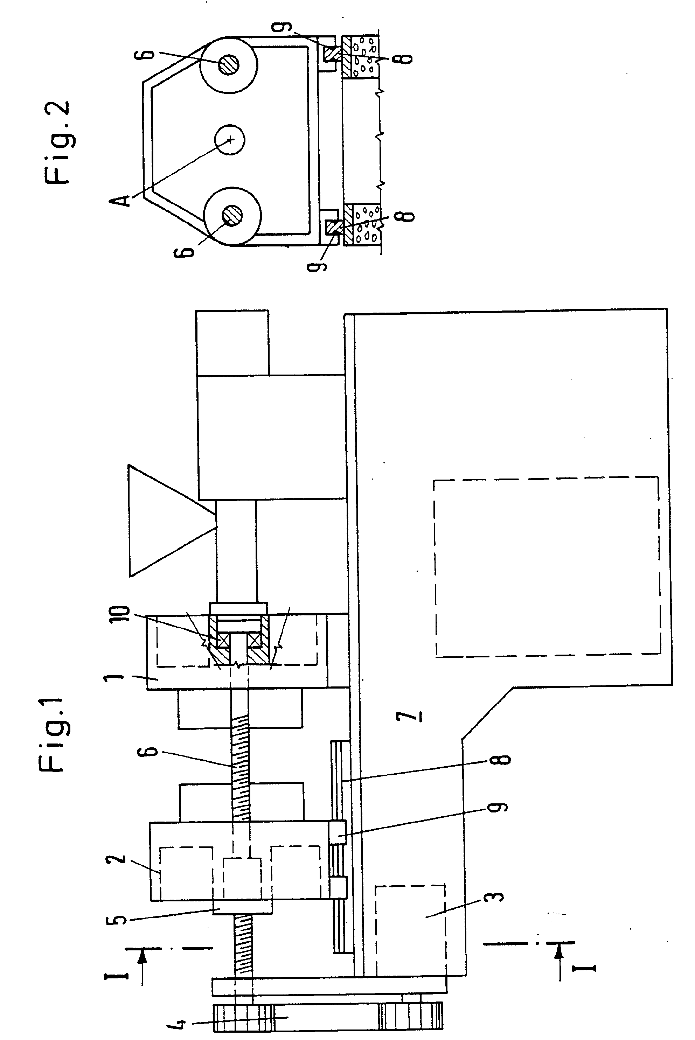

Wie Figur 1 schematisch zeigt, weist die Schließeinheit einer Spritzgießmaschine gemäß der Erfindung eine Feste 1 und eine bewegliche Werkzeugaufspannplatte 2 auf, die mittels zwei symmetrisch angeordneter Kugelspindeln 6 angetrieben wird. Die Kugelspindeln 6 werden für die synchrone Einstellung der beweglichen Werkzeugaufspannplatte 2 von einem gemeinsamen Hydromotor 3 verstellt, der mit den Zahnriemen 4 das Antriebsmoment auf die beiden Kugelspindeln 6 bringt. Über die in der beweglichen Werkzeugaufspannplatte 2 justierten Kugelumlaufmuttern 5 wird die Werkzeugschließbewegung eingeleitet. Die auftretenden Spindel-Axialkräfte werden in der Lagerstelle 10 der festen Werkzeugaufspannplatte 1 abgestützt, ebenso wie die Maximalbelastung bei Schließkraft.

In erfindungsgemäßer Weise ist die feste Werkzeugaufspannplatte 1 mit ihrer vergrößerten Basis auf dem besonders formstabilen Polymerbeton-Maschinenbett 7 in der Einbaulage fixiert. Auf dem Polymerbeton-Maschinenbett ist auch die Führung 8 für die bewegliche Werkzeugaufspannplatte 2 fixiert. An der Fußseite der beweglichen Werkzeugaufspannplatte 2 sind verteilt vier Linearwälzelemente 9 angeordnet, die auf der Führung 8 eine exakte Bewegung und Lagestabilität der Werkzeugaufspannplatte auch bei exzentrischen Belastungen ermöglichen.

In Figur 2 ist erkennbar, daß die Kugelspindeln 6 in einer Ebene mit der Mittellängsachse A der Werkzeugaufspannplatten 1, 2 verlaufen, so daß eine besonders günstige Krafteinleitung ermöglicht wird.

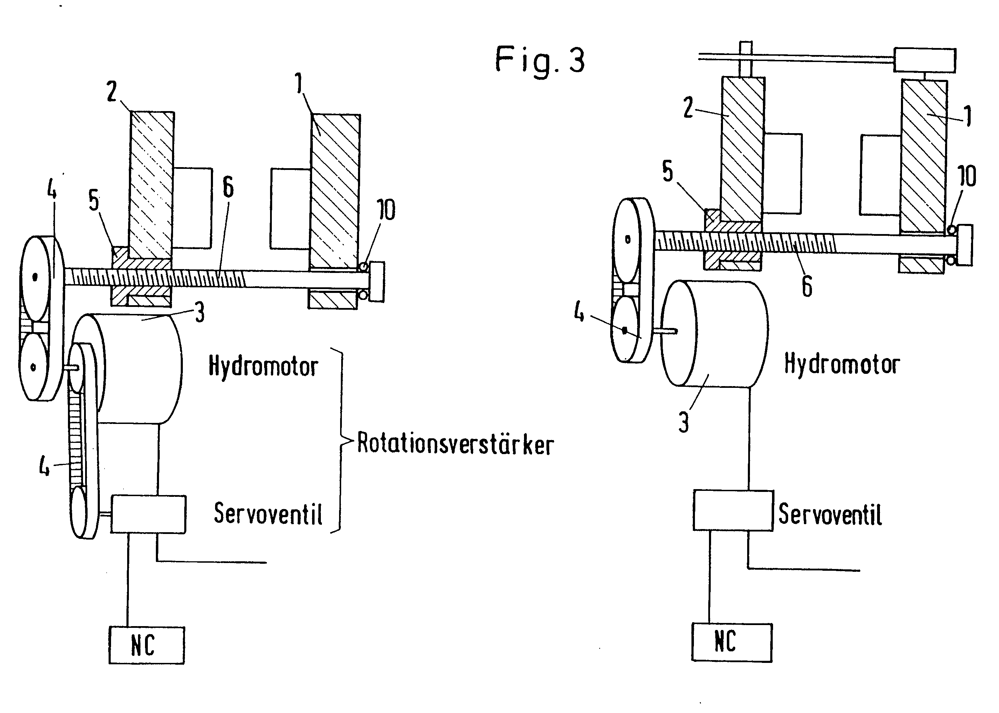

In Figur 3 sind zwei Schaltungsprinzipien des Hydraulik-Antriebes aufgezeigt. Die gezeigten Antriebsvarianten stützen sich auf einen schaltbaren Hydromotor 3 mit zwei wählbaren Schluckvolumen. Eine Alternative dazu ist die Kombination eines Konstanthydromotors mit einem Schaltgetriebe, um die unterschiedlichen Anforderungen bezüglich Drehmoment/Drehzahl-Verhältnis zu erfüllen. Während der Fahrbewegung ist eine große Antriebsdrehzahl, während des Schließkraftaufbaus dagegen eine kleine Drehzahl mit großem Drehmoment erforderlich. Dies wird durch entsprechend gewählte Übersetzungsverhältnisse im Schaltgetriebe erreicht. Eine mögliche Bauform wäre ein in einer Zahnriemenscheibe integriertes schaltbares Planetengetriebe.

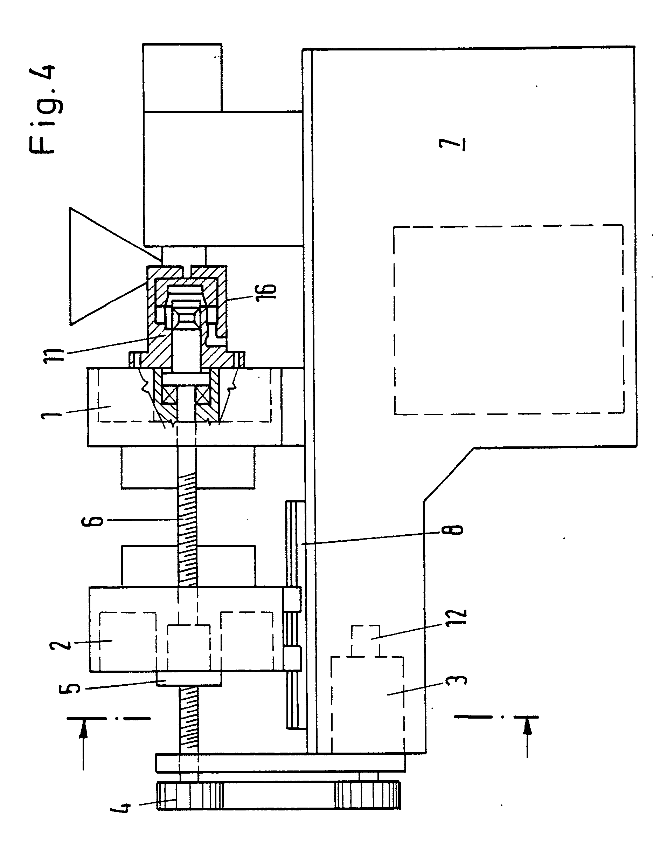

In Figur 4 ist eine Ausführungsvariante der Schließeinheit dargestellt, bei der eine Teilung zwischen Schließkraftaufbau und Fahrbewegung erfolgt. Dazu ist an der festen Werkzeugaufspannplatte 1 jeweils ein hydromechanisches Spannelement 11 auf dem Ende der Kugelspindel 6 montiert, das nach der Werkzeugschließung ohne Schließkraftaufbau über den Hydromotor 3 und bei Sicherung der Kugelspindel 6 gegen Verdrehung mittels integrierter Keilelemente 16 die erforderliche Schließkraft auf die Kugelspindel 6 einleitet. Die Keilelemente 16 bewirken dabei eine Axialkraft auf die Kugelspindel 6 im Sinne einer Werkzeugschließbewegung. Das bei 8 dargestellte Axiallager ist hierbei nur für die auftretenden Fahrbewegungskräfte wirksam. Der Spindelantrieb über dem Hydromotor 3 ist einstufig nur für die Fahrbewegung der beweglichen Werkzeugaufspannplatte 2 vorgesehen, wobei zur Absicherung am Hubende eine Bremse 12 vorgesehen ist. Gleiche Teile sind bei dieser Ausführung gleich bezeichnet.

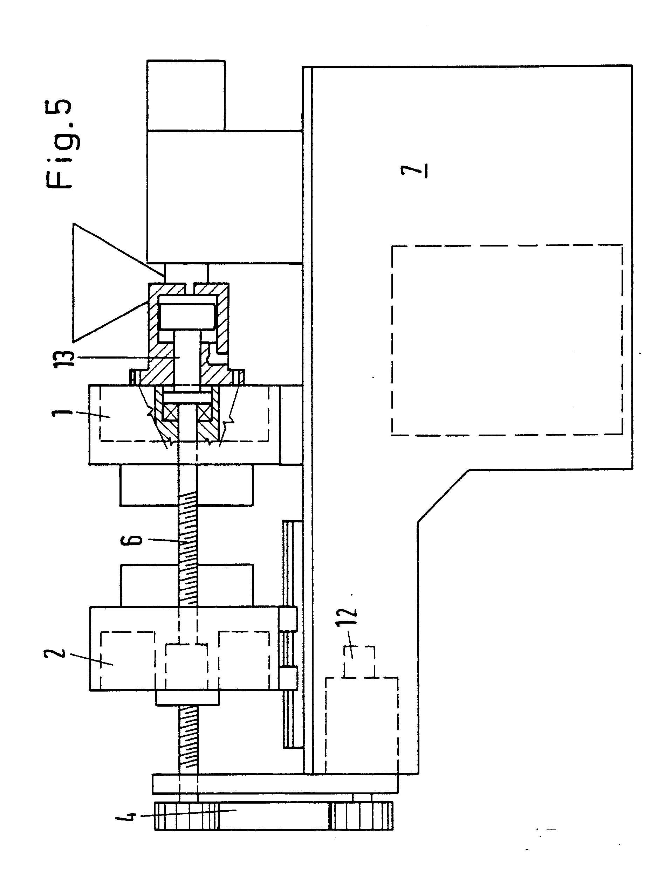

In Figur 5 ist eine Ausführungsform dargestellt, bei der ebenfalls gleiche Teile gleich bezeichnet sind. Abweichend von der vorher beschriebenen Lösung wird die Schließkrafterzeugung dadurch bewerkstelligt, daß das Ende der Kugelspindel 6 als Kolben 13 ausgebildet bzw. mit diesem verbunden ist, der in einem Zylinder zur Bildung eines Druckkissens geführt ist. Mit diesem Druckkissen wird es möglich, eine Axialzugkraft auf die Kugelspindel 6 aufzubringen, um bei blockierter Kugelspindeldrehung eine Schließkraft auf die Werkzeugaufspannplatten aufzubringen. Diese Lösung ähnelt der in Figur 4 beschriebenen mit dem Unterschied, daß statt mechanischer Keilelemente das Druckkissen einer Hydraulik-Einheit verwendet wird. Auch hier ist der Hydromotor 3 einstufig mit Bremse 12 ausgeführt.

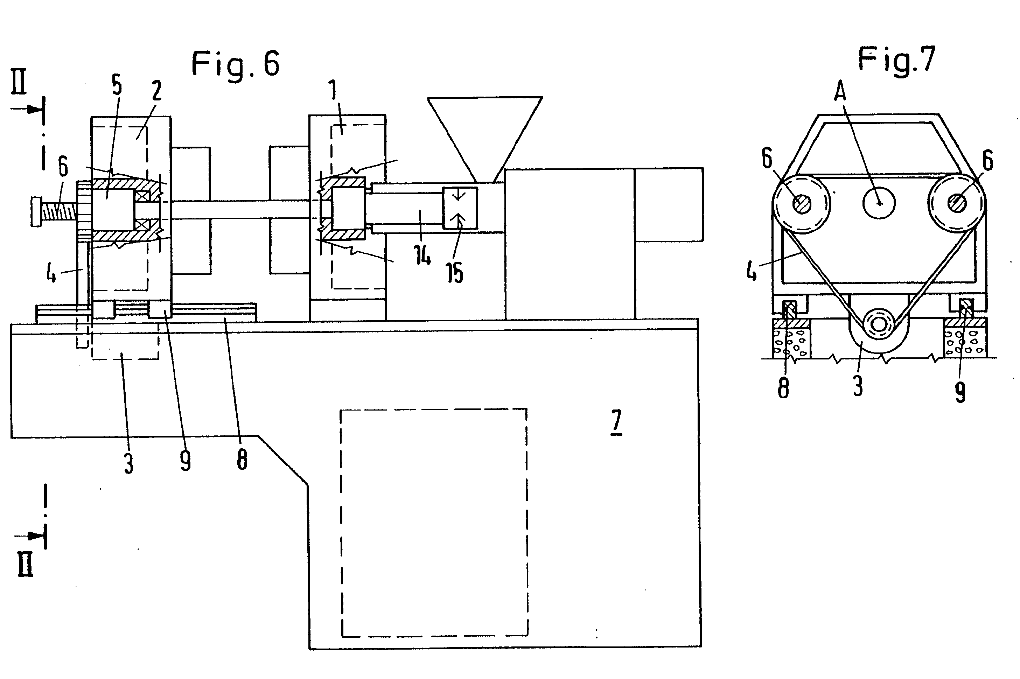

In Figur 6 dient zum Fahrantrieb für die bewegliche Werkzeugaufspannplatte 2 ein hydraulischer Antriebszylinder 14. Damit wird ein Nachteil der Kugelspindel 6 ausgeschaltet, der darin liegt, daß nur begrenzte Linear-Geschwindigkeiten durch die bautechnisch bedingten Grenzdrehzahlen erreichbar sind. Der Antriebszylinder 14 läßt größere Linear-Geschwindigkeiten zu. Nach Blockierung des Antriebszylinders 14 am Ende des Fahrhubes wird der Schließkraftaufbau über die Kugelspindel 6 vorgenommen, wozu beide Kugelumlaufmuttern 5, wie in Figur 7 ersichtlich, synchron und gemeinsam vom Hydromotor 3 verstellt werden, der mit dem Zahnriemen 4 sein Antriebsmoment überträgt. Über die in der beweglichen Werkzeugaufspannplatte 2 justierte Kugelumlaufmutter 5 wird die Schließkraft eingeleitet.

## Patentansprüche

1. Präzisionsschließeinheit für eine Spritzgießmaschine mit einem Maschinenbett (7) und je einer darauf angeordneten festen und verschiebbar geführten Werkzeugaufspannplatte (2) sowie mindestens einem hydraulischen Antrieb (3) zum Bewegen und/oder Verriegeln der Werkzeugaufspannplatte (2), gekennzeichnet durch die Kombination folgender teilweise bekannter Merkmale :

a) Die verschiebbare Werkzeugaufspannplatte (2) ist fußseitig an einer Präzisions-Linearführung (8) geführt, die fest und verwindungssteif mit dem Maschinenbett (7) verbunden ist,

b) beidseitig symmetrisch zur Zentralachse (A) durch die Werkzeugaufspannplatte (2) sind in einer horizontalen Ebene mit der Zentralachse (A) und parallel zueinander zwei motorisch synchron angetriebene Kugelspindeln (6) vorgesehen, mit denen die bewegbare Werkzeugaufspannplatte (2) verschiebbar und/oder die Schließkraft aufbringbar ist,

EP 0 363 394 B1

c) der zum Antrieb und oder zum Verriegeln der bewegbaren Werkzeugaufspannplatte (2) vorgesehene hydraulische Antrieb (3) ist drehbewegungsmäßig unmittelbar mit der Kugelspindel (6) verbunden.

2. Präzisionsschließeinheit nach Anspruch 1, dadurch gekennzeichnet, daß die Präzisions-Linearführung (8) auf einem aus einem Polymerbeton geformten Maschinenbett (7) befestigt ist.

3. Präzisionsschließeinheit nach Anspruch 1, dadurch gekennzeichnet, daß der Hydromotor (3) auf mindestens zwei Schluckvolumen umschaltbar ist.

4. Präzisionsschließeinheit nach Anspruch 1, dadurch gekennzeichnet, daß dem Hydromotor (3) ein mechanisches Umschaltgetriebe zugeordnet ist, mit dem mindestens zwei Drehmoment/Drehzahlverhältnisse schaltbar sind.

5. Präzisionsschließeinheit nach Anspruch 4, dadurch gekennzeichnet, daß das Umschaltgetriebe als in den Antriebsstrang der Kugelspindel (6) integriertes Planetengetriebe ausgebildet ist.

6. Präzisionsschließeinheit nach Anspruch 3, dadurch gekennzeichnet, daß zur Aussteuerung des Hydromotors (3) ein Servoventil im geschlossenen Regelkreis und Vier-Quadranten-Betrieb vorgesehen ist.

7. Präzisionsschließeinheit nach Anspruch 3, dadurch gekennzeichnet, daß zur Aussteuerung des Hydromotors (3) ein schrittmotorgesteuertes Servoventil (hydraulischer Rotationsverstärker) vorgesehen ist.

8. Präzisionsschließeinheit nach Anspruch 1, dadurch gekennzeichnet, daß der Hydromotor (3) als reiner Fahrantrieb für die bewegbare Werkzeugaufspannplatte (2) konzipiert und als Konstantmotor mit Bremse (12) ausgebildet ist und daß zum Verriegeln der beweglichen Werkzeugaufspannplatte (3) gegenüber der festen (1) hydraulische und/oder hydraulisch betätigte Verriegelungselemente (11) vorgesehen sind.

9. Präzisionsschließeinheit nach Anspruch 8, dadurch gekennzeichnet, daß an der festen Werkzeugaufspannplatte (1) je ein jedem Kugelspindelende zugeordnetes, auf diesem montiertes hydromechanishes Spannelement (11) zugeordnet ist, über das mittels Keilwirkung (16) eine axialgerichtete Schließkraft auf die gegen Drehung gesicherten Kugelspindeln (6) hydraulisch aufbringbar ist.

10. Präzisionsschließeinheit nach Anspruch 9, dadurch gekennzeichnet, daß an der festen Werkzeugaufspannplatte (1) je eine mit dem Ende der Kugelspindeln (6) integrierte Kolben-Zylinder-Einheit (13) vorgesehen ist, mit der bei blockierter Spindeldrehung die Schließkraft der beiden Werkzeugaufspannplatten (1, 2) erzeugbar ist.

11. Präzisionsschließeinheit nach Anspruch 1, dadurch gekennzeichnet, daß die Kugelspindeln (6) zur Aufbringung der Werkzeugschließkraft mit je einer in der bewegbaren Werkzeugaufspannplatte (2) angeordneten Kugelumlaufmutter (5) korrespondieren, die von einem gemeinsamen Hydromotor (3) synchron antreibbar sind und für die Werkzeugschließbewegung eine den gesamten Fahrhub bestreichende Kolben-Zylinder-Einheit (14) vorgesehen ist, die mechanisch formschlüssig verriegelbar (15) ist.

## Claims

1. Precision clamping unit for an injection moulding machine with a machine bed (7) and with a fixed and a slidingly guided mould clamping plate (2) mounted thereon as well as with at least one hydraulic drive (3) for moving and/or locking the mould clamping plate (2), characterized by the combination of the following partly already known features :

(a) the slidable mould clamping plate (2) is guided at its foot on a precision linear guide (8) connected rigidly and in a torsion-resistant manner to the machine bed (7),

(b) two ball spindles (6), which are driven synchronously by a motor and with which the movable mould clamping plate (2) is slidable and/or the clamping force can be provided, are arranged on both sides symmetrically to the central axis (A) through the mould clamping plate (2) in a horizontal plane with the central axis (A) and parallel to each other,

(c) the hydraulic drive (3) provided for driving and/or locking the movable mould clamping plate (2) is directly and rotatably connected to the ball spindle (6).

2. Precision clamping unit in accordance with Claim 1, characterized by the fact that the precision linear guide (8) is affixed to a machine bed (7) formed from a polymer concrete.

3. Precision clamping unit in accordance with Claim 1, characterized by the fact that the hydraulic motor (3) can be switched over to at least two absorption volumes.

4. Precision clamping unit in accordance with Claim 1, characterized by the fact that a mechanical shift gearing enabling at least two torque-to-speed ratios to be selected is associated with the hydraulic motor (3).

5. Precision clamping unit in accordance with Claim 4, characterized by the fact that the shift gearing takes the form of a planetary gear integrated in the driving chain of the ball spindle (6).

6. Precision clamping unit in accordance with Claim 3, characterized by the fact that for the operation of the hydraulic motor (3) a servo-valve is provided in the closed regulating circuit and four-quadrant operation.

5

7. Precision clamping unit in accordance with Claim 3, characterized by the fact that for the operation of the hydraulic motor (3) a step-motor-controlled servo-valve (hydraulic rotation amplifier) is provided.

8. Precision clamping unit in accordance with Claim 1, characterized by the fact that the hydraulic motor (3) is designed purely as an operating drive for the movable mould clamping plate (2) and constructed as a constant motor with a brake (12) and that hydraulic and/or hydraulically operated locking elements (11) are provided for locking the movable mould clamping plate (3) in relation to the fixed plate (1).

9. Precision clamping unit in accordance with Claim 8, characterized by the fact that the fixed mould clamping plate (1) bears one hydro-mechanical clamping element (11) associated with each end of the ball spindle and mounted thereon, by which said element, by a wedge effect (16), an axially directed clamping force can be hydraulically applied to the ball spindles (6) secured against rotation.

10. Precision clamping unit in accordance with Claim 9, characterized by the fact that the fixed mould clamping plate (1) bears a piston-cylinder unit (13) which is integrated with the end of the ball spindles (6) and with which the clamping force of the two mould clamping plates (1, 2) can be produced when the rotation of the spindles is blocked.

11. Precision clamping unit in accordance with Claim 1, characterized by the fact that the ball spindles (6) for the production of the tool clamping force each correspond to a ball circulation nut (5) which is provided in the movable tool clamping plate (2), the nuts being synchronously drivable from one common hydraulic motor (3), while for the mould closing movement a piston-cylinder unit (14) is provided which sweeps over the complete driving stroke and which is mechanically lockable (15) on the form-closure principle.

## Revendications

1. Unité de fermeture de précision pour une machine de moulage par injection, comportant un banc de machine (7) et une plaque de serrage de moule (2), guidée de façon déplaçable et agencée sur celui-ci à demeure, ainsi qu'au moins un entraînement hydraulique (3) pour déplacer et/ou verrouiller la plaque de serrage de moule (2), caractérisée par la combinaison de caractéristiques suivantes partiellement connues :
   a) la plaque mobile de serrage de moule (2) est guidée, à sa base, sur un guidage linéaire de précision (8), qui est solidaire du banc de machine (7) et rigide en torsion avec celui-ci,
   b) deux broches sur roulement à billes (6) motorisées de façon synchrone sont prévues des deux côtés, symétriquement par rapport à l'axe central (A), à travers la plaque de serrage de moule (2), et dans un plan horizontal avec l'axe central (A), et parallèlement l'une à l'autre, broches grâce auxquelles la plaque mobile de serrage de moule (2) peut être déplacée et/ou grâce auxquelles la force de fermeture ou de serrage peut être mise en oeuvre,
   c) l'entraînement hydraulique (3) prévu pour entraîner et/ou verrouiller la plaque mobile de serrage de moule (2) est relié directement en rotation à la broche (6).

2. Unité de fermeture de précision selon la revendication 1, caractérisée en ce que le guidage linéaire de précision (8) est fixé sur un banc de machine (7) formé à partir de béton au polymère.

3. Unité de fermeture de précision selon la revendication 1, caractérisée en ce que le moteur hydraulique (3) peut être commuté sur au moins deux volumes de dimensionnement.

4. Unité de fermeture de précision selon la revendication 1, caractérisée en ce que, au moteur hydraulique (3), est associée une transmission mécanique grâce à laquelle au moins deux rapports de vitesse de rotation/couple peuvent être choisis.

5. Unité de fermeture de précision selon la revendication 4, caractérisée en ce que la transmission est réalisée en tant qu'engrenage planétaire intégré au tronçon d'entraînement de la broche (6).

6. Unité de fermeture de précision selon la revendication 3, caractérisée en ce que, pour le réglage du moteur hydraulique (3), une servo-soupape est prévue dans le circuit de réglage fermé et pour le fonctionnement à quatre quadrants.

7. Unité de fermeture de précision selon la revendication 3, caractérisée en ce que, pour le réglage du moteur hydraulique (3), une servo-soupape commandée par un moteur pas à pas (amplificateur de rotation hydraulique) est prévue.

8. Unité de fermeture de précision selon la revendication 1, caractérisée en ce que le moteur hydraulique (3) est conçu comme organe de translation pur pour la plaque mobile de serrage de moule (2) et est réalisé en tant que moteur à cylindrée constante à frein (12), et en ce que, pour verrouiller la plaque mobile de serrage de moule (2) par rapport à la plaque fixe (1), des éléments de verrouillage (11) hydrauliques et/ou actionnés hydrauliquement sont prévus.

9. Unité de fermeture de précision selon la revendication 8, caractérisée en ce que, à la plaque fixe de serrage de moule (1), est associé un élément de serrage hydromécanique (11), associé à chaque extrémité de broche et monté sur celle-ci, grâce auquel, par action de coinçage (16), une force de serrage ou de fermeture orientée axialement peut être mise en oeuvre hydrauliquement sur les broches (6) bloquées en rotation.

10. Unité de fermeture de précision selon la revendication 9, caractérisée en ce que, sur la plaque fixe de serrage de moule (1), est prévu un vérin (13) intégré à l'extrémité des broches (6), grâce auquel, les broches étant bloquées en rotation, peut être créée la force de fermeture ou de serrage des deux plaques de serrage de moule (1, 2).

11. Unité de fermeture de précision selon la revendication 1, caractérisée en ce que les broches sur roulement à billes (6) pour mettre en oeuvre la force de serrage du moule correspondent, chacune, avec un écrou (5) agencé dans la plaque mobile de serrage de moule (2), écrous qui peuvent être entraînés, de façon synchrone, par un moteur hydraulique commun (3), et, pour la fermeture du moule, est prévu un vérin (14) couvrant la course totale, qui peut être verrouillé mécaniquement (15).

Fig.1

Fig.2

EP 0 363 394 B1

# Fig.3

Hydromotor

Rotationsverstärker

Servoventil

NC

Hydromotor

Servoventil

NC

EP 0 363 394 B1

Fig.4

EP 0 363 394 B1

Fig.5

Fig. 6

Fig. 7

EP 0 363 394 B1